# EUROPÄISCHE PATENTSCHRIFT

(11) **EP 2 912 654 B1**
(45) Veröffentlichungstag und Bekanntmachung des Hinweises auf die Patenterteilung: **26.07.2017**
(21) Anmeldenummer: 13795439.2
(22) Anmeldetag: 28.10.2013
(51) Int. Cl.: G09F 23/06, G09F 21/04

(54) **DISPLAYELEMENT ZUR DARSTELLUNG VON INFORMATIONEN AN EINEM SCHIEBEGRIFF**
DISPLAY ELEMENT FOR DISPLAYING INFORMATION ON A PUSH HANDLE
ÉLÉMENT D'AFFICHAGE POUR LA REPRÉSENTATION D'INFORMATIONS SUR UNE POIGNÉE DE GUIDAGE

(30) Priorität: 29.10.2012 DE 102012110348
(43) Veröffentlichungstag der Anmeldung: 02.09.2015
(73) Patentinhaber: Wieth, Franz, 82178 Puchheim (DE); FILOSI, Andreas, 82178 Puchheim (DE)
(72) Erfinder: SONNENDORFER, Horst, 82178 Puchheim (DE)
(74) Vertreter: Braun-Dullaeus Pannen Patent- und Rechtsanwälte
(86) Internationale Anmeldenummer: PCT/EP2013/072513
(87) Internationale Veröffentlichungsnummer: WO 2014/067899

(56) Entgegenhaltungen:
- EP-A1- 0 212 557
- DE-U1- 29 714 013
- DE-U1- 29 803 007
- US-B2- 8 136 275

## Beschreibung

Die Erfindung betrifft ein Displayelement zur Darstellung von Informationen an einem Schiebegriff eines von Hand bewegbaren Einkaufswagens, wobei das Displayelement einen Grundkörper umfasst, der einen Bereich aufweist, die von einem lösbar am Grundkörper gehaltenen und transparenten Deckel abgedeckt ist, und wobei zwischen dem Grundkörper und dem Deckel ein flächig ausgebildeter Informationsträger anordbar ist. Des Weiteren betrifft die Erfindung ein Verfahren zum Einsetzten eines flächigen Informationsträgers in ein, insbesondere erfindungsgemäßes, Displayelement.

Der Schiebegriff eines Einkaufswagens ist der Gegenstand im Groß- und Einzelhandel, mit dem der Kunde am längsten in Kontakt bleibt. Er muss ihn immer wieder greifen, wenn er den Einkaufswagen durch das Geschäft bewegt. Somit liegt der Scheibegriff ständig im Blickfeld des Kunden, zum Beispiel wenn er den Einkaufswagen auf der Suche nach den gewünschten Produkten die Gänge entlang schiebt oder über den Griff hinweg seine bereits in den Korb des Einkaufswagens geladenen Waren betrachtet. Der ständig im Blickfeld des Kunden sich befindende Schiebegriff ist damit geradezu prädestiniert, vom Geschäft als informationsrespektive Werbeträger genutzt zu werden.

Seitdem sich diese Erkenntnis durchgesetzt hat, werden Schiebegriffe immer öfter mit Displayelementen ausgerüstet. In diese können Werbeträger eingelegt werden, üblicherweise ist dies ein bedrucktes Papier oder ein entsprechender Karton. Um ausreichende Fläche für die Werbung zur Verfügung stellen zu können, sind die Displayelemente meist deutlich voluminöser als der eigentliche Griffbereich des Schiebegriffs. Dabei kann das Displayelement bereits bei Fertigung als integraler Bestandteil des Griffes vorgesehen sein oder als ein später am Griff zu befestigendendes, also nachrüstbares Display ausgebildet werden.

Die Displayelemente werden normalerweise mittig am Schiebegriff angeordnet, so dass der Kunden den Griff über die links und rechts davon angeordneten Griffbereiche weiterhin gut greifen kann. Durch die außen angeordneten Griffbereiche lässt sich der Einkaufswagens auch wie gewohnt ohne Probleme lenken.

Der für den Informationsträger vorgesehene Bereich des Displayelements wird von einem lösbar am Displayelement befestigten Deckel bedeckt. Der Deckel verhindert eine einfaches Entfernen oder ein Herausfallen des Informationsträgers und schützt ihn zudem gegen Verschmutzung. Um den üblicherweise regelmäßig erfolgenden Austausch des darunter liegenden Informationsträgers zu erleichtern, ist es aber andererseits wichtig, dass der Deckel für das Personal leicht zu lösen ist. Deshalb ist die Befestigung des Deckels meist als simple Steckverbindung ausgebildet.

Eng am Displayelement anliegend, verhindert der Deckel auch ein Verrutschen des Informationsträgers. Der Deckel sollte natürlich möglichst transparent ausgebildet sein, so dass die darunter dargebotene Information gut sichtbar ist. Ein solches Displayelement wird von dem US 2 136 275 B2 gezeigt.

Um die darzubietende Information bestmöglich im Blickfeld des Kunden zu positionieren, werden die Displayelemente meist so geformt, das der in sie eingelegte Werbeträger dem Kunden zugeneigt ist. Der informationsträger wird beim Einsetzen in das Displayelement nicht auf einer waagerechten Fläche aufgelegt, sondern auf einer Schräge. Die schräg ausgerichtete Auflagefläche erschwert die Positionierung des Informationsträgers, da er auf ihr leicht ins Rutschen kommt. Um dies zu verhindern, hält das Personal den Informationsträger meist mit einer Hand in Position und hat nur noch eine Hand zum Schließen des Deckels frei.

Teilweise wird der Deckel nicht nur als Schutz, sondern auch als Halterung für den Werbeträger genutzt. In diesem Fall wird der informationsträger nicht auf das Displayelement aufgelegt und dann vom Deckel bedeckt, sondern erst an der Innenseite des Deckels befestigt und mit diesem zusammen auf das Displayelement gelegt. Ein solcher Deckel weist an seiner Innenseite entsprechende Aufnahmen für den Informationsträger auf. Das Einsetzen des Informationsträgers in diese Aufnahmen ist aber zeitaufwändig und erfordert mehrere Handgriffe.

Viele Displayelemente werden nicht nur dem Kunden zugeneigt, sondern weisen eine gewölbte Auflagefläche für den Informationsträger auf. Ein gewölbter

Auflagebereich für den Informationsträger, sei es auf dem Displayelement oder an der Innenseite des entsprechend gewölbten Deckel, erfordert noch einiges mehr an Geschicklichkeit bei der Positionierung des im Regelfall als ebenes, nicht gewölbtes Rechteck ausgebildeten Informationsträgers.

Aufgabe der vorliegenden Anmeldung ist es, ein vorgenanntes Displayelement vorzuschlagen, bei dem das Einsetzen des Informationsträgers einfach und sicher erfolgen kann. Zudem ist es eine Aufgabe der Anmeldung, ein einfaches durchzuführendes Verfahren zum Einsetzen eines Informationsträgers in ein vorgenanntes Displayelement vorzuschlagen.

Diese Aufgaben werden von einem Displayelement mit den Merkmalen des Anspruchs 1, beziehungsweise einem Verfahren gemäß Anspruch 8 gelöst. Vorteilhafte Ausgestaltungen werden in den jeweiligen Unteransprüchen genannt.

Ein wesentlicher Grundgedanke der Erfindung ist es, dass der Grundkörper eine Nute zum Einsetzen einer Endkante des Informationsträgers umfasst, wobei die eingesetzte Endkante kraftschlüssig in der Nute gehalten ist. Der Kraftschluss wird erzeugt, in dem der Informationsträger zwischen den beiden Seitenwänden der Nute eingeklemmt wird. Die vorgeschlagene Nute im Grundkörper ermöglicht ein sicheres Positionieren des Informationsträgers am Grundkörper. Der Kraftschluss zwischen Nute und Informationsträger gewährleistet, dass dieser nach seiner Positionierung in der Nute nicht mehr verrutschen kann. Das den Informationsträger einlegende Personal muss somit den einmal eingesetzten Informationsträger nicht weiter in Position halten. Es hat nun beide Hände frei, um den Deckel auf den Grundkörper aufzusetzen bzw. zu schließen. Auch ein zusätzliches Einsetzen oder Fixieren einer der anderen Endkanten des Informationsträgers am Grundkörper oder deren manuelles Halten ist nicht erforderlich.

Der in der Nute gehaltene Rand des Informationsträgers stellt aber nicht nur sicher, dass der Informationsträger vor dem Schließen des Deckels sicher in seiner Position gehalten wird, auch während des Schließvorgangs des Deckels bleibt der Rand durch den gegebenen Kraftschluss weiter in der Nute fixiert. Wenn der in der Nute gehaltene Informationsträger beim Schließen des Deckels an diesem zur Anlage kommt, wird er vom Deckel mitgeführt. Hierdurch wird der Informationsträger in Richtung des Grundkörpers gebogen. Dies hat den besonderen Vorteil, dass der Informationsträger nicht von Hand, sondern von dem Deckel in seine Endposition auf der für ihn vorgesehenen Auflagefläche des Grundkörpers geführt wird. Dieser ansonsten vom Personal separat durchzuführende Arbeitsschritt wird also beim sowieso erforderlichen Schließen des Deckels gleich mit erledigt. Der Informationsträger positioniert sich damit vom Deckel mitgenommen quasi von alleine in seiner Endposition. Hinzu kommt, dass das Personal mit dem Schließen des Deckels gleich zwei Arbeitschritte ausführen und abschließen kann, wodurch das Einsetzen eines Informationsträgers nicht nur einfacher, sondern auch schneller vonstatten geht.

Die Erfindung macht es sich dabei zu nutze, dass der für den Informationsträger genutzte Werkstoff eine vordefinierte Stärke aufweist, die über die Fläche üblicherweise gleichbleibend ist. Die Nute kann somit ohne Probleme so dimensioniert werden, dass das bedruckte Papier oder der Karton in ihr kraftschlüssig, also im Reibschluss, gehalten wird. Es ist hierfür nicht erforderlich, dass die Hochachse der Nute in einen rechten Winkel zur angrenzenden Oberfläche des Grundkörpers steht. Vielmehr kann die Nute nach ergonomischen Gesichtspunkten ausgerichtet werden, so dass eine vor dem Schiebegriff stehende Person die Nute gut im Blickfeld hat und den Rand des Informationsträgers leicht in die Nute einführen kann.

Von Vorteil ist es, wenn die Nute in ihrer Länge einer der gängigen Normen entspricht, so dass in ihrer Größe normierte Informationsträger, zum Beispiel entsprechend DIN A4 geformte Papiere, exakt in die Nute passen. Der entsprechend genormte Informationsträger lässt sich in eine derart ausgebildete Nute passgenau einsetzen und wird damit automatisch in der gewünschten, insbesondere zentrierten Position über der Auflagefläche fixiert.

Vorzugsweise weist die Nute eine Mehrzahl von Stegen auf, welche die eingesetzte Endkante kraftschlüssig in der Nute halten. Die Nute kann also insgesamt breiter ausgebildet sein als für den Kraftschluss erforderlich. Sie wird nur an einigen Stellen durch die Stege verengt. Diese Engstellen sind so dimensioniert, dass hier der Kraftschluss gewährleistet ist. Eine breite, mit mehreren Engstellen versehene Nute ist fertigungstechnisch wesentlich leichter herzustellen als eine durchgehend schmale, respektive enge Nute. Zudem erleichtert die nun nur noch an bestimmten Punkten der Nute zu überwindende Reibkraft das Einsetzen der Endkante des Informationsträgers in die Nute. Von Vorteil ist es, mindestens zwei voneinander beabstandete Engstellen in der Nute vorzusehen. Auf diese Weise wird ein versehentliches schräges oder verkantetes Einsetzen des Informationsträgers vermieden.

Von Vorteil ist es auch, wenn die Nute parallel zu einer Außenkante des vom Deckel abgedeckten Bereichs des Grundkörpers angeordnet ist. Hierdurch könne die Informationsträger so in den Bereich eingesetzt werden, dass sie passgenau entlang der Außenkante verlaufen. Dies verbessert den optischen Gesamteindruck des Schiebegriffs.

Wenn die Auflagefläche für den Informationsträger als Vertiefung am Grundkörper ausgebildet ist, können die Auflagefläche und der Deckel so aneinander angepasst werden, dass der Übergang vom Grundkörper zum geschlossenen Deckel stufenlos erfolgt. Insbesondere wenn der Informationsträger genau in die von Auflagefläche und geschlossenen Deckel gebildeten Kontur passt, ergibt sich der Eindruck eines qualitativ hochwertigen Produkts aus einem Guss.

In einer bevorzugten Ausführungsform deckt der am Grundkörper geschlossene Deckel die Nute ab. Ein die Nute überdeckender Deckel schütz die Nut gegen Beschädigungen und verhindert, dass der Informationsträger aus der Nute herausgezogen werden kann. Liegt er eng an der Nute an knickt er den Informationsträger leicht ab, so dass er direkt an der Nute eine Kante ausbildet. Auf den derart gehaltenen Informationsträger einwirkende Kräfte wirken dann leicht quer zur Nute und verstärken damit den Halt des Informationsträgers in seiner Position.

In einer der besonders bevorzugten Ausführungsform weist der am Grundkörper gehaltene Deckel an seinem der Nute angewandten Ende eine Rastnase auf, die in dafür vorgesehene Öffnungen des Grundkörpers eingreift. Mittels der Rastnase lässt sich der Deckel schnell und sicher am Grundkörper befestigen. Trotz der im Prinzip einfachen Befestigung lässt sich eine solche Rastnase, insbesondere wenn sie tief in den Grundkörper eingreift, nicht leicht öffnen. Die Rastnase reicht aus, um den Deckel gegen einfache Öffnungsversuche und versehentliche Stöße ausreichend zu sicher. Da der unter dem Deckel sich befindende Informationsträger nur einen geringen Wert besitzt und leicht ersetzt werden kann, reicht diese Befestigung des Deckels für den gewollten Zweck vollkommen aus.

Von Vorteil ist es auch, wenn der Deckel einen Rahmen für den Informationsträger ausbildet. Ein solcher Rahmen hält den Informationsträger beim Biegen zusätzlich in Position und verhindert ein seitliches und/oder nach oben gerichtetes Ausbrechen des Informationsträgers aus seiner Fixierung. Er unterstützt damit den Reibschluss. Insbesondere wenn die Grundlage des Informationsträgers ein etwas steiferen Karton ist, können die beim Biegen des Informationsträgers auftretenden Kräfte so sicher aufgefangen werden.

In einer besonders bevorzugten Ausführungsform wird der Deckel am Grundkörper nach dem Einsetzen der Endkante in die Nute eingesteckt. Der Deckel wird also im geöffneten Zustand nicht mehr am Grundkörper gehalten, sondern vollständig vom Grundkörper gelöst. Hierdurch ist die Nute besonders leicht zugänglich, ein Einstecken des Informationsträgers wird nicht durch einen offen stehenden Deckel behindert. Der Deckel kann nach dem Fixieren des Informationsträgers in der Nute einfach wieder aufgesteckt werden. Hierfür reicht es vollkommen aus, den Deckel mit endseitigen Fortsätzen auszubilden, die in beidseitig der Nute vorgesehene Öffnungen im Grundkörper eingeführt werden.

Ein Ausführungsbeispiel der Erfindung wird anhand der folgenden Figuren näher erläutert. Dabei zeigen:
- Figur 1: Einen Schnitt durch einen Grundkörper des Schiebegriffs mit abgenommenen Deckel;
- Figur 2: Den gleichen Schnitt durch den Grundkörper, nun mit in die Nute eingesetztem Informationsträger;
- Figur 3: Den gleichen Schnitt durch den Grundkörper, nun mit zusätzlich angesetztem Deckel und
- Figur 4: Den gleichen Schnitt durch den Grundkörper, nun mit geschlossenem Deckel.

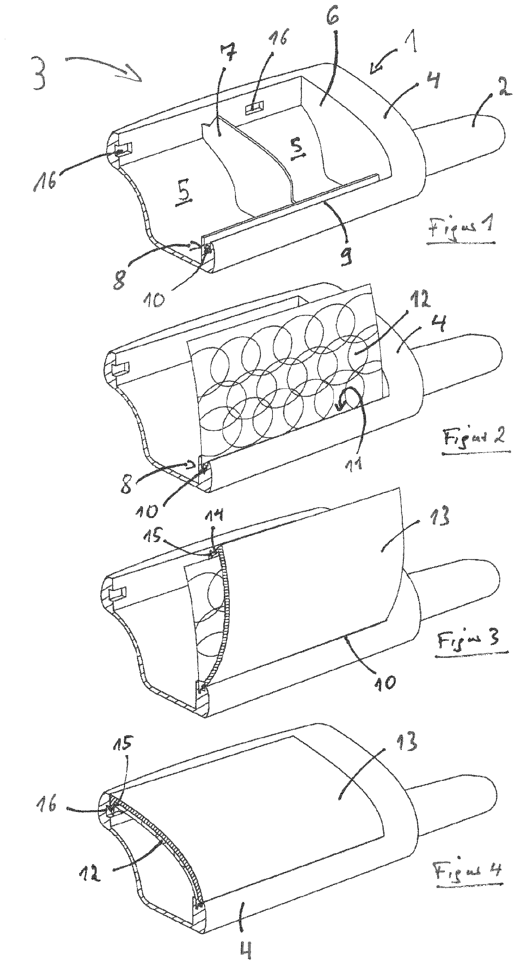

Das in Figur 1 gezeigte Displayelement 1 ist einstückig mit dem hier nur angedeuteten Griffbereich 2 eines Schiebegriffs 3 ausgebildet. Der Grundkörper 4 ist so ausgerichtet, dass er der den Einkaufswagen schiebenden Person zugeneigt ist und ist zudem in diesem Bereich gewölbt. Er weist einen Bereich 5 auf, der von einem hier nicht gezeigten Deckel abgedeckt werden kann. Der Bereich 5 ist als Vertiefung im Grundkörper ausgeformt. Parallel zu den Seitenkanten 6 der Vertiefung ist ein Mittelsteg 7 vorgesehen, an dem ein auf den Bereich 5 aufgelegter Informationsträger zur Anlage kommt.

Die im Grundkörper 4 ausgebildete Nute 8 verläuft parallel zur einer Außenkante 9 der Bereichs 5, welche an der dem Einkaufswagen abgewandten Seite des Grundkörpers den Bereich 5 abschließt. Zwischen der Nute 8 und der Außenkante 9 ist eine Auflagefläche 10 vorgesehen, in die der Deckel eingesetzt werden kann.

Die Figur 2 zeigt den in die Nute 8 mit einer Endkante 11 eingesetzten Informationsträger 12. Hier nicht gezeigte Stege in der Nut halten den Informationsträger 12 kraftschlüssig in der eingesetzten Position. Die Stege verengen den Spalt der Nute 8 und bilden so eine Engstelle aus, in welcher der Informationsträger klemmend gehalten wird. Der Informationsträger wird hierdurch über dem Grundkörper 4 freistehend positioniert. Die Position und Länge der Nute 8 sind dabei so bemessen, dass der Informationsträger 12 nur so eingesetzt werden kann, dass er über dem Bereich 5 zentriert ist und dabei zumindest nahezu bündig an den Seitenkanten 6 des Grundkörpers 4 anliegt.

In der Figur 3 ist der Deckel 13 in die Aufnahme 10 am Grundkörper 4 eingesetzt. Der Deckel 13 ist gewölbt und entspricht in seiner Form dem Verlauf des Grundkörpers 4 außerhalb des Bereichs 5, also seitlich der Außenkante 6. An seinem entgegengesetztem Ende weist er einen zum Grundkörper 1 gerichteten Fortsatz 14 auf, der mit einer Rastnase 15 abschließt. Der Fortsatz 14 bildet einen Anschlag für den Informationsträger 12 aus, der so daran gehindert wird, trotz des gegebenen Reibschlusses aus der Nute 8 herauszurutschen. Hierbei ist es vollkommen ausreichend, wenn der Fortsatz 14 lediglich im Bereich der Rastnasen 15, also nicht durchgehend, ausgebildet ist

Wie in Figur 4 gezeigt greifen die Rastnasen 15 bei geschlossenem Deckel 13 in dafür vorgesehene Öffnungen 16 im Grundkörper 4 ein und halten so den Deckel 13 in seiner Position am Grundkörper 4 fest. Beim Schließen des Deckels 13 wurde der Informationsträger 12 in Richtung des Grundkörpers 4 gebogen und liegt nun in seiner Endposition fixiert gewölbt am Grundkörper 4 an. Dabei deckt der Deckel 13 den Informationsträger 12 vollständig ab. Zudem schließt er bündig an den Grundkörper 4 an.

## Patentansprüche

1. Displayelement (1) zur Darstellung von Informationen an einem Schiebegriff (3) eines von Hand bewegbaren Einkaufswagens, wobei das Displayelement (1) einen Grundkörper (4) umfasst, der einen Bereich (5) aufweist, die von einem lösbar am Grundkörper (4) gehaltenen und transparenten Deckel (13) abgedeckt ist, und wobei zwischen dem Grundkörper (4) und dem Deckel (13) ein flächig ausgebildeter Informationsträger (12) anordbar ist,
**dadurch gekennzeichnet,**
**dass** der Grundkörper (4) eine Nute (8) zum Einsetzen einer Endkante (11) des Informationsträgers (12) umfasst, wobei Stege den Spalt der Nute (8) verengen und eine Engstelle bilden, in welcher der Informationsträger (12) klemmend gehalten wird.

2. Displayelement nach Anspruch 1,
**dadurch gekennzeichnet,**
**dass** die Nute eine Mehrzahl von Stegen aufweist, welche die eingesetzte Endkante (11) kraftschlüssig in der Nute (8) halten.

3. Displayelement nach Anspruch 1 oder 2,
**dadurch gekennzeichnet,**
**dass** die Nute (8) parallel zu einer Außenkante (9) des vom Deckel (13) abgedeckten Bereichs (5) des Grundkörpers (4) angeordnet ist.

4. Displayelement nach einem der vorherigen Ansprüche,
**dadurch gekennzeichnet,**
**dass** der am Grundkörper (4) gehaltene Deckel (13) die Nute (8) abdeckt.

5. Displayelement nach einem der vorherigen Ansprüche,
**dadurch gekennzeichnet,**
**dass** die vom Deckel (13) abdeckbare Bereich (5) des Grundkörpers (4) als Ausnehmung am Grundkörper (4) ausgebildet ist.

6. Displayelement nach einem der vorherigen Ansprüche,
**dadurch gekennzeichnet,**
**dass** der am Grundkörper (4) gehaltene Deckel (13) an seinem der Nute (8) angewandten Ende eine Rastnase (15) aufweist, die in dafür vorgesehene Öffnungen (16) des Grundkörpers (4) eingreift.

7. Displayelement nach einem der vorherigen Ansprüche,
**dadurch gekennzeichnet,**
**dass** der Deckel (13) einen Rahmen (14) für den Informationsträger (12) ausbildet.

8. Verfahren zum Einsetzen eines flächigen Informationsträgers (12) in ein Displayelement (1) an einem Schiebegriff (3) eines von Hand bewegbaren Einkaufswagens, in ein Displayelement der vorangegangenen Ansprüche,
**dadurch gekennzeichnet,**
**dass** eine Endkante (11) des flächigen Informationsträgers (12) in eine Nute (8) in einem Grundkörper (4) des Displayelements (1) eingesetzt wird, der in der Nute (8) gehaltene Informationsträger (12) beim Schließen eines Deckels (13) an diesem zur Anlage kommt und in Richtung des Grundkörpers (4) gebogen wird.

9. Verfahren nach Anspruch 8,
**dadurch gekennzeichnet,**
**dass** der Deckel (13) den in der Nute (8) gehaltenen Informationsträger (12) in seine vorgesehene Endposition am Grundkörper (4) führt.

10. Verfahren nach einem der Ansprüche 8 oder 9,
**dadurch gekennzeichnet,**
**dass** der Deckel (13) am Grundkörper (4) nach dem Einsetzen der Endkante (11) in die Nute (8) eingesteckt wird.

## Claims

1. A display element (1) for displaying information on a handlebar (3) of a shopping trolley which can be moved manually, the display element (1) comprising a base body (4), which has a region (5) which is covered by a cover (13), which is held in a detachable manner on the base body (4) and is transparent, and it being possible to arrange an information medium (12) of flat construction between the base body (4) and the cover (13),
**characterized**
**in that** the base body (4) comprises a slot (8) for inserting an end edge (11) of the information medium (12), wherein webs narrow the gap of the slot (8) and form a constriction, in which the information medium (12) is held in a clamping manner.

2. The display element according to Claim 1,
**characterized**
**in that** the slot has a plurality of webs, which hold the inserted end edge (11) in the slot (8) non-positively.

3. The display element according to Claim 1 or 2,
**characterized**
**in that** the slot (8) is arranged parallel to an outer edge (9) of the region (5) of the base body (4) covered by the cover (13).

4. The display element according to one of the preceding claims,
**characterized**
**in that** the cover (13) held on the base body (4) covers the slot (8).

5. The display element according to one of the preceding claims,
**characterized**
**in that** the region (5) of the base body (4) which can be covered by the cover (13) is constructed as a recess on the base body (4).

6. The display element according to one of the preceding claims,
**characterized**
**in that** the cover (13) held on the base body (4) has a latching lug (15) at the end thereof applied to the slot (8), which engages into openings (16) of the base body (4) provided for that.

7. The display element according to one of the preceding claims,
**characterized**
**in that** the cover (13) forms a frame (14) for the information medium (12).

8. A method for inserting a flat information medium (12) into a display element (1) on a handlebar (3) of a shopping trolley which can be moved manually, into a display element of the preceding claims,
**characterized**
**in that** an end edge (11) of the flat information medium (12) is inserted into a slot (8) in a base body (4) of the display element (1); when a cover (13) is closed, the information medium (12) held in the Slot (8) comes to rest against this cover and is bent in the direction of the base body (4).

9. The method according to Claim 8,
**characterized**
**in that** the cover (13) guides the information medium (12) held in the slot (8) into its provided end position on the base body (4).

10. The method according to one of Claims 8 or 9,
**characterized**
**in that** the cover (13) is plugged in on the base body (4) after the insertion of the end edge (11) into the slot (8).

## Revendications

1. Élément d'affichage (1) destiné à représenter des informations sur une poignée de poussée (3) d'un chariot de supermarché déplaçable manuellement, l'élément d'affichage (1) comprenant un corps de base (4) qui comporte une zone (5) qui est recouverte par un couvercle (13) maintenu de manière amovible sur le corps de base (4) et transparent et entre le corps de base (4) et le couvercle (13) pouvant être placé un support d'informations (12),
**caractérisé en ce que**
le corps de base (4) comprend une rainure (8) pour l'insertion d'une arête d'extrémité (11) du support d'informations (12), des listels rétrécissant l'encoche de la rainure (8) et formant un étranglement dans lequel le support d'informations (12) est maintenu par serrage.

2. Élément d'affichage selon la revendication 1,
**caractérisé en ce que**
la rainure comporte une pluralité de listels, lesquels maintiennent l'arête d'extrémité (11) insérée dans la rainure (8) par complémentarité de force.

3. Élément d'affichage selon la revendication 1 ou 2,
**caractérisé en ce que**
la rainure (8) est placée à la parallèle d'une arête extérieure (9) de la zone (5) du corps de base (4) recouverte par le couvercle (13)

4. Élément d'affichage selon l'une quelconque des revendications précédentes,
**caractérisé en ce que**
le couvercle (13) maintenu sur le corps de base (4) recouvre la rainure (8).

5. Élément d'affichage selon l'une quelconque des revendications précédentes,
**caractérisé en ce que**
la zone (5) du corps de base (4) pouvant être recouverte par le couvercle (13) est conçue sous la forme d'un évidement sur le corps de base (4).

6. Élément d'affichage selon l'une quelconque des revendications précédentes,
**caractérisé en ce que**
le couvercle (13) maintenu sur le corps de base (4) comporte sur son extrémité opposée à la rainure (8) un taquet d'enclenchement (15) qui s'engage dans les orifices (16) prévus à cet effet du corps de bases (4) .

7. Élément d'affichage selon l'une quelconque des revendications précédentes,
**caractérisé en ce que**
le couvercle (13) forme un cadre (14) pour le support d'informations (12).

8. Procédé destiné à insérer un support d'informations (12) plan dans un élément d'affichage (1) sur une poignée de poussée (3) d'un chariot de supermarché déplaçable manuellement, dans un élément d'affichage des revendications précédentes
**caractérisé en ce**
**qu'**on insère une arête d'extrémité (11) du support d'informations (12) plan dans une rainure (8) dans un corps de base (4) de l'élément d'affichage (1), à la fermeture d'un couvercle (13), le support d'informations (12) maintenu dans la rainure (8) vient s'appliquer sur celui-ci et se recourbe dans la direction du corps de base (4).

9. Procédé selon la revendication 8,
**caractérisé en ce que**
le couvercle (13) guide le support d'informations (12) maintenu dans la rainure (8) dans sa position extrême prévue sur le corps de base (4).

10. Procédé selon l'une quelconque des revendications 8 ou 9,
**caractérisé en ce que**
qu'on emboîte le couvercle (13) sur le corps de base (4) après l'insertion de l'arête d'extrémité (11) dans la rainure (8).
